Europäisches Patentamt

(19) European Patent Office                    (11) Publication number:          **0 247 812**

Office européen des brevets                                                **A2**

(12)                    **EUROPEAN PATENT APPLICATION**

(21) Application number: **87304593.4**          (51) Int. Cl.⁴: **F 16 L 11/08**
                                                         **B 29 D 23/22**
(22) Date of filing: **22.05.87**


(30) Priority: **30.05.86 GB 8613233**            (71) Applicant: **ANGUS FIRE ARMOUR LIMITED**
                                                    **Bentham**
                                                    **Lancaster LA2 7NA  (GB)**
(43) Date of publication of application:
   **02.12.87  Bulletin  87/49**                 (72) Inventor: **Harcourt, Robert Murdoch**
                                                    **R.R. No.1**
                                                    **King City Ontario LOG 1KO  (CA)**
(84) Designated Contracting States:
   **DE ES FR GB GR IT NL**                       (74) Representative: **Brooke-Smith, Fred et al**
                                                    **STEVENS, HEWLETT & PERKINS 5 Quality Court**
                                                    **Chancery Lane**
                                                    **London WC2A 1HZ  (GB)**

(54) **Hoses.**

(57) There is disclosed a method of making a hose comprising the steps of extruding a tube 10 having inner 13 and outer 12 covering of rubber on a woven jacket 11, inserting the tube 10 into a sheath 15 having a larger diameter than the tube, curing the tube 10 which expands radially during said curing so that the outer covering 12 is urged into tight engagement with the sheath. The sheath prevents further radial expansion of the tube and the outer covering 12 is thus embossed with the surface topography of the inner surface of the sheath upon removal of the sheath. The hose thus formed has good diametral swell properties.

The hose may also be formed with perforations in the inner covering 13 and offset perforations in the outer covering 12 which perforations terminate at the jacket 11 and allow water in the hose to percolate.

FIG.2

## Description

HOSES

This invention relates to hoses and has a particularly useful but not exclusive application in hoses used for fire-fighting and more particularly in hoses used in forest fire-fighting.

According to a first aspect this invention provides a method of making a hose comprising the steps of forming a tube by extruding onto the internal and external surfaces of a tubular jacket a covering of rubber or curable elastomeric material, confining the jacket and the covering in a tubular restraining sheath or mould of larger internal diameter than the external diameter of the jacket and its covering, curing the covering by means of heat and pressure applied within the tube so that radial expansion of the tube during curing urges the tube into tight engagement with the sheath or mould which substantially prevents further radial expansion of the tube, and removing the sheath or mould on completion of the curing process.

Preferably, the internal surface of the sheath or mould is rough or textured and the external surface of the covering is thus correspondingly rough or textured according to the internal surface of the sheath or mould upon removal of the sheath or mould.

According to a second aspect this invention provides a hose comprising a woven or braided tubular jacket having a lining on its internal surface and a covering on its external surface which lining and covering are formed from rubber or elastomeric material, a first set of perforations extending outward through the lining and terminating at the jacket, and a second set of perforations extending through the covering and terminating at the jacket which perforations are staggered with respect to the perforations of the first set.

The invention further provides a method of making a hose comprising the steps of forming a tube by extruding a rubber or elastomeric material onto the internal and external surfaces of a woven or braided tubular jacket to form an internal lining and an external covering on the jacket, forming a plurality of through perforations in the external covering which perforations terminate at the jacket, introducing to the inside of the tube a carrier having at least one pin roller mounted thereon to form perforations extending through the thickness of the lining and terminating at the jacket, and inducing relative motion between the carrier and the tube in the lengthwise direction of the tube.

The invention will now be described in more detail with reference to the accompanying diagrammatic drawings in which:

Figure 1 is a longitudinal cross-section illustrating the first stage in the manufacture of a hose according to the invention,

Figure 2 illustrates in longitudinal cross-section a second stage in the manufacture of a hose according to the invention, and

Figure 3 illustrates in radial cross-section how the hose is formed with perforations.

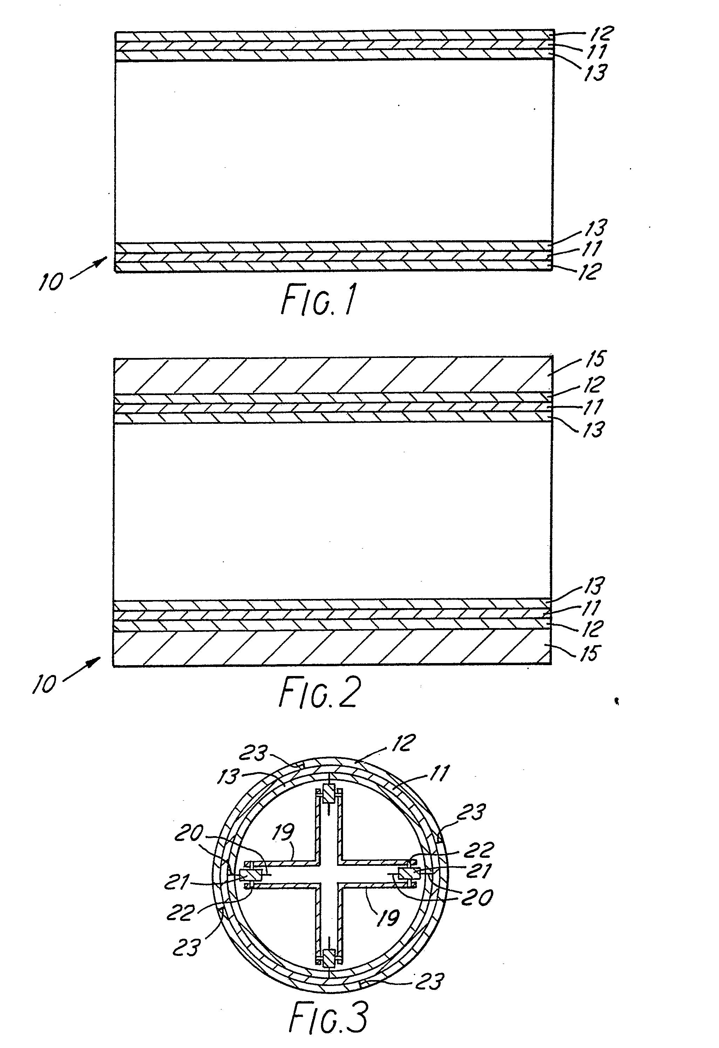

Referring to Figures 1 and 2 in the first stage of manufacture of the hose, a tube 10 is produced using a hose extruder preferably by an apparatus as described in Patent Specification No.856955 incorporating a mandrel over which is drawn a woven reinforcing jacket 11. In the present method, however, the jacket 11 has a larger diameter than the external diameter of the mandrel. The rubber is extruded onto the internal surface of the jacket 11 to form a lining 13 and onto the external surface of the jacket 11 to form a covering 12. The tube thus has the external appearance of a standard hose formed by the machine but the woven jacket 11 has an unusually highly crimped weft. It will be appreciated that the lining 13 and the covering 12 may be formed from the same material as each other or from different materials to each other.

The uncured modified reinforced tube 10 thus extruded from the extruder is inserted into a sheath 15 or mould having a larger internal diameter than the external diameter of the tube 10 but smaller than the conventionally attained external diameter of a cured tube of similar original size. The tube 10 is then vulcanised using a conventional controlled steam pressure/temperature cycle. The tube 10 expands radially during curing until it is in tight engagement with the sheath 15 or mould as shown in Figure 2. The sheath then confines the tube 10 and substantially prevents further outward radial expansion of the tube. As the tube tries to expand radially, the outer covering 12 presses hard against the sheath 15 so that the surface topography of the inside of the sheath is embossed on the external surface of the covering 12 of the hose. After the hose has been removed from the sheath there remains a permanent textured imprinted pattern on the covering.

In the next stage of manufacture for example as described in our Canadian Patent No.802016 means are used to form perforations 23 extending inwardly through the covering 12 and terminating at the woven jacket 11. In standard hoses these perforations are used to allow the escape of volatile materials during the vulcanising process and are subsequently sealed with latex to avoid the ingress of moisture, but in the present method these perforations are left open.

Figure 3 shows the method by which perforations are next made in the lining 13 of the hose. The perforations extend outwardly through the lining and again terminate at the woven jacket 11. Pin rollers 21 having a plurality of pins 20 extending therefrom are rotatably mounted on respective axles 22. The axles 22 are secured on a carrier 19 which is placed inside the hose. The pins 20 are of such a size and number that when the carrier 19 is drawn along the hose, the pins continually perforate the lining 13, the perforations thus formed terminating at said woven jacket 11.

When the hose is in use therefore some water is able to penetrate the lining via the inner perforations, wick along the woven jacket 11 and escape via the outer perforations 23 to the external surfcae of the hose.

Reinforced hoses are conveniently made by extruding rubber onto the internal and external surfaces of a woven tubular jacket so as to embed the jacket in a continuous matrix of rubber, for example as described in British Specification No.856955. The rubber is then vulcanised by introducing steam to the inside of the hose and subjecting the steam to a controlled pressure/temperature cycle. However, because the hose is not restrained diametrally, yarns in the jacket are subjected to high temperatures whilst in a state of extension caused by the pressure. This process is commonly applied to many textile fabrics and is called heat setting.

The result of heat setting yarns under tension is that the yarns have a low extensibility under a given load. Applied to a hose this means that the hose will have reduced diametral swell properties.

In forest fire-fighting, however, friction loss is a common problem. Larger diameter hoses reduce losses due to friction and the method described above is thus advantageous in produing a compact hose which has good diametral swell properties thereby reducing the friction losses whilst in use. The hose produced by the present method has better diametral swell properties, because it has been constrained by the sheath during the rubber's vulcanising stage, than an equivalent standard hose which has been cured without the use of a sheath. The modified hose is, however, extruded from the same machinery as the standard hose and therefore has, when not in use, the same internal and external diameters as the standard hose thereby enabling it to be used with standard hose couplings.

Forest fire-fighters traditionally roll their hoses into a rugby ball shape known as "melon roll". When using hoses which have an embossed external surface produced by curing the hose whilst contained in the sheath it has been found that the outer surface of the hose is less slippery than standard hoses because its surface is roughened or textured and thereby facilitates rolling into a melon ball even when the surface of the hose is wet.

When a hose is used in forest fire conditions it often has to lie against very hot ground and undergrowth. It is often necessary therefore to use "percolating" hoses which ensure that the external surface of the hose is continuously wet and therefore has enhanced resistance to burning and damage. The percolating hose produced by the present method allows a gradual seepage of water to its external surface which does not significantly affect its ability to transmit water to the fire. It has also been found that the textured surface of the hose also tends to retain a film of water on its surface.

## Claims

1. A method of making a hose comprising the steps of forming a tube by extruding onto the internal and external surfaces of a tubular jacket a covering of rubber or curable elastomeric material, confining the jacket and the covering in a tubular restraining sheath or mould of larger internal diameter than the external diameter of the jacket and its covering, curing the covering by means of heat and pressure applied within the tube so that radial expansion of the tube during curing urges the tube into tight engagement with the sheath or mould which substantially prevents further radial expansion of the tube, and removing the sheath or mould on completion of the curing process.

2. A method as claimed in claim 1, wherein the internal surface of the sheath or mould is rough or textured and the external surface of the covering is thus correspondingly rough or textured according to the internal surface of the sheath or mould upon removal of the sheath or mould.

3. A method as claimed in claim 1 or claim 2, wherein the curing process is achieved by introducing steam to the inside of said tube, said steam being subject to a controlled pressure/temperature cycle.

4. A method as claimed in any one of claims 1 to 3, wherein said sheath is rigid or semi-rigid.

5. A method as claimed in any one of claims 1 to 4, wherein the jacket is made from a woven textiles material.

6. A hose comprising a woven or braided tubular jacket having a lining on its internal surface and a covering on its external surface which lining and covering are formed from rubber or elastomeric material, a first set of perforations extending outward through the lining and terminating at the jacket, and a second set of perforations extending through the covering and terminating at the jacket which perforations are staggered with respect to the perforations of the first set.

7. A hose as claimed in claim 6, wherein the external surface of the hose is roughened or textured.

8. A method of making a hose comprising the steps of forming a tube by extruding a rubber or elastomeric material onto the internal and external surfaces of a woven or braided tubular jacket to form an internal lining and an external covering on the jacket, forming a plurality of through perforations in the external covering which perforations terminate at the jacket, introducing to the inside of the tube a carrier having at least one pin roller mounted thereon to form perforations extending through the thickness of the lining and terminating at the jacket, and inducing relative motion between the carrier and the tube in the lengthwise direction of the tube.

9. A method as claimed in claim 8, wherein, after the step of forming the tube by extrusion and before the step of forming the perforations, there is provided the steps of confining the jacket and the covering in a tubular restraining sheath or mould of larger internal diameter than the· external diameter of the jacket and its covering, curing the covering by means of heat and pressure applied within the tube so that radial expansion of the tube during curing urges the tube into tight engagement with the sheath or mould which substantially prevents further radial expansion of the tube, and removing the sheath or mould on completion of the curing process.

FIG.1

FIG.2

FIG.3